# EUROPEAN PATENT SPECIFICATION

(11) **EP 4 226 822 B1**
(45) Date of publication and mention of the grant of the patent: **10.12.2025**
(21) Application number: 22175350.2
(22) Date of filing: 25.05.2022
(51) Int. Cl.: A47K 3/30, E04B 1/19

(54) **SHOWER ROOM FRAME STRUCTURE AND SHOWER ROOM**
DUSCHKABINEN-RAHMENSTRUKTUR UND DUSCHKABINE
STRUCTURE DE CADRE DE SALLE DE DOUCHE ET SALLE DE DOUCHE

(30) Priority: 11.02.2022 CN 202220279826 U
(43) Date of publication of application: 16.08.2023
(73) Proprietor: Fujian Xihe Sanitary Ware Technology Co., Ltd., QuanZhou, Fujian (CN)
(72) Inventor: LIN, Xiaofa, QuanZhou, Fujian (CN); LIN, Xiaoshan, QuanZhou, Fujian (CN); DENG, Xiaoqing, QuanZhou, Fujian (CN); LIU, Hongzheng, QuanZhou, Fujian (CN); ZHUANG, Zhijin, QuanZhou, Fujian (CN)
(74) Representative: Meissner Bolte Nürnberg

(56) References cited:
- CN-A- 112 727 154
- CN-U- 210 948 330
- DE-U1- 202018 100 470

## Description

### Technical Field

This application relates to, but is not limited to, shower room technology, and is directed towards a shower room frame structure and particularly towards a shower room.

### Background

In the existing shower room frame structure, the transverse profile is generally fixedly connected with one connector by fasteners, the vertical supporting profile is fixedly connected with one connector by fasteners, and then the two connectors are fixedly connected by fasteners. Such solution uses many accessories, has complex assembling process and low assembling efficiency.

The document CN112727154 A disclosed a quick connecting assembly, which includes a first connecting piece and a second connecting piece, wherein an inserting groove is formed in the first connecting piece, a first clamping part is arranged on at least one inner side wall of the inserting groove, the second connecting piece includes a bolt corresponding to the inserting groove, and a second clamping part is arranged on the bolt.

### Summary

The present invention provides a shower room frame structure comprising at least the features of claim 1, which can simplify the assembling process and improve the assembling efficiency.

The present invention provides a shower room frame structure, which includes a transverse profile and a vertical supporting profile; and a quick mounting assembly for connecting the transverse profile and the vertical supporting profile. The quick mounting assembly includes a connector and a limiter, the connector is fixedly connected with the transverse profile and is fitted with the vertical supporting profile for positional restriction, and the limiter is connected with the connector and is fitted with the vertical supporting profile for positional restriction.

The shower room frame structure provided by the embodiments of the present application realizes the quick assembling of the transverse profile and the vertical supporting profile by utilizing the quick mounting assembly. The quick mounting assembly includes a connector and a limiter. During assembling, it is only needed to fix the connector on the transverse profile, and connect the limiter with the connector, and then assembly them with the vertical supporting profile. The limiting fit between the connector and the vertical supporting profile and the limiting fit between the limiter and the vertical supporting profile are used to ensure the relative fixation between the vertical supporting profile and the transverse profile. Therefore, the present solution omits a connector fixedly connected with the vertical supporting profile and a fixing process between the connector and the vertical supporting profile, thereby reducing the number of accessories of the shower room, simplifying the assembling process of the shower room and being beneficial for improving the assembling efficiency of the shower room.

In an exemplary embodiment, the limiter includes an inserting pin, the connector is provided with an inserting slot, and the vertical supporting profile is provided with an inserting hole. One end of the inserting pin is inserted into the inserting slot and capable of sliding relative to the connector along a first direction. The other end of the inserting pin is inserted into the inserting hole to limit the relative movement between the transverse profile and the vertical supporting profile along a second direction. The first direction is a length direction of the transverse profile, and the second direction is perpendicular to the first direction.

In an exemplary embodiment, the transverse profile is provided with a first sliding hole, the connector is provided with a second sliding hole, the inserting pin is provided with a first connecting hole, and the quick mounting assembly further includes a fixer. The fixer is configured to pass through the first sliding hole, the second sliding hole and the first connecting hole along the second direction, and be capable of sliding relative to the transverse profile along the first direction.

In an exemplary embodiment, one end of the inserting pin inserted into the inserting hole is provided with a guide ramp for guiding the inserting pin to move in a direction of entering the inserting slot.

In an exemplary embodiment, the quick mounting assembly further includes an elastic member fitted with the inserting pin and configured for driving the inserting pin to move in a direction of inserting into the inserting hole by utilizing the reset elastic force of the elastic member.

In an exemplary embodiment, the inserting pin includes a limiting part and a fitting part, wherein the limiting part is inserted into the inserting hole, the fitting part is connected with the limiting part, a first supporting surface is provided between the limiting part and the fitting part, and a second supporting surface is provided in the inserting slot. The elastic member is a spring, the spring is sleeved on the fitting part, one end of the spring abuts against the first supporting surface, and the other end of the spring abuts against the second supporting surface.

The connector includes a connecting seat and a connecting block, the transverse profile is provided with a first mounting slot adapted with the connecting seat, and the vertical supporting profile is provided with a second mounting slot adapted with the connecting block. The connecting seat is at least partially inserted into the first mounting slot along the length direction of the transverse profile and fixedly connected with the transverse profile. The connecting block is connected with the connecting seat, and at least partially inserted into the second mounting slot along a length direction of the vertical supporting profile, and is fitted with the vertical supporting profile for positional restriction, so as to limit the relative movement between the vertical supporting profile and the transverse profile along the length direction of the transverse profile.

A first end of the transverse profile in a width direction is provided with a guide slot, and an opening of the guide slot faces away from a second end of the transverse profile in the width direction. A side wall of the connecting block is provided with a limiting rib, a slot wall of the second mounting slot is provided with a limiting slot, and the limiting rib is embedded in the limiting slot. The connecting block is limited at a first end of the vertical supporting profile in the length direction, and the limiting rib extends obliquely in a direction away from the opening of the guide slot along a direction from the first end of the vertical supporting profile in the length direction to a second end of the vertical supporting profile in the length direction.

In an exemplary embodiment, the included angle between the limiting rib and the plane where the opening of the guide slot is located is in a range of 2° to 3°.

In an exemplary embodiment, the connecting block is provided with a limiting protrusion, the vertical supporting profile is provided with a limiting groove, and the limiting protrusion is embedded in the limiting groove to limit the relative movement between the connector and the vertical supporting profile along the length direction of the vertical supporting profile.

An embodiment of the present application also provides a shower room, including a shower room frame structure as described in any one of the above embodiments and a door glass hung on the transverse profile of the shower room frame structure.

Other features and advantages of the present application will be set forth in the specification which follows, and in part will be obvious from the specification, or may be learned by implementing of the present application. The other advantages of the present application can be realized and obtained by the solutions described in the specification and drawings.

### Brief Description of Drawings

The accompanying drawings are used to provide understanding of the technical schemes of the present application, and constitute a part of the specification. They are used together with the embodiments of the present application to explain the technical schemes of the present application, and do not constitute a restriction on the technical schemes of the present application.
FIG. 1 is a partial assembling schematic diagram of a shower room frame structure provided by an embodiment of the present application;
FIG. 2 is a partial exploded structural schematic diagram of the transverse profile and quick mounting assembly in FIG. 1;
FIG. 3 is a structural schematic diagram of the quick mounting assembly in FIG. 2;
FIG. 4 is a structural schematic diagram of the connector in FIG. 3 viewed from left; and
FIG. 5 is a partial structural schematic diagram of a shower room provided by an embodiment of the present application.

The reference numerals are as follows:
1- transverse profile, 11- first sliding hole, 12- first mounting slot, 13- guide slot, 14-second fastener;
2- quick mounting assembly, 21- connector, 211- connecting seat, 2111- connecting plate, 2112- guide block, 2113- second sliding hole, 2114- second connecting hole, 212- connecting block, 2122- limiting rib, 2123- limiting protrusion, 213- inserting slot, 22- limiter, 221-limiting part, 2211- first connecting hole, 2212- guide ramp, 222- fitting part, 23- fixer, 24-elastic member;
3- vertical supporting profile, 31- inserting hole, 32- second mounting slot, 33- limiting slot, 34- limiting groove;
4- door glass.

### Detailed Description

In order to make the purposes, technical schemes and advantages of the present disclosure clearer, embodiments of the present disclosure will be described in detail below with reference to the accompanying drawings. It should be noted that the embodiments in the present application and the features in the embodiments may be combined with each other arbitrarily if there is no conflict.

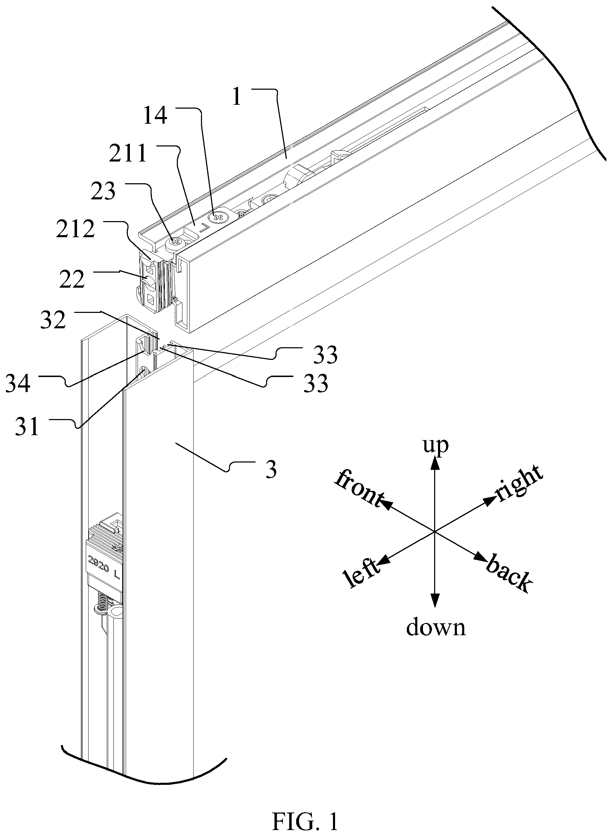

As shown in FIG. 1, one embodiment of the present application provides a shower room frame structure, including a transverse profile 1, a vertical supporting profile 3, and a quick mounting assembly 2 for connecting the transverse profile 1 and the vertical supporting profile 3. The transverse profile 1 is configured for fixing a door glass, and the transverse profile 1 can be a guide rail profile.

The quick mounting assembly 2 includes a connector 21 and a limiter 22. The connector 21 is fixedly connected with the transverse profile 1 and is fitted with the vertical supporting profile 3 for positional restriction. The limiter 22 is connected with the connector 21 and fitted with the vertical supporting profile 3 for positional restriction.

The shower room frame structure provided by +1te-embeetime+ef the present application includes a transverse profile 1, a vertical supporting profile 3 and a quick mounting assembly 2. The transverse profile 1 extends in a horizontal direction after the assembling is completed, and the door glass 4 is hung on the transverse profile 1 and can slide along the transverse profile 1 to realize the opening and closing of a door. The vertical supporting profile 3 can be mounted on a supporting carrier such as a wall, and extends in a vertical direction to support the transverse profile 1.

The quick mounting assembly 2 is configured for connecting the transverse profile 1 and the vertical supporting profile 3, so as to realize the quick assembling of the transverse profile 1 and the vertical supporting profile 3. The quick mounting assembly 2 includes a connector 21 and a limiter 22. During assembling, it only needs to fix the connector 21 on the transverse profile 1, and connect the limiter 22 with the connector 21, and then assembly them with the vertical supporting profile 3. The limiting fit between the connector 21 and the vertical supporting profile 3 and the limiting fit between the limiter 22 and the vertical supporting profile 3 are used to ensure the relative fixation between the vertical supporting profile 3 and the transverse profile 1. Therefore, the present solution omits the connector 21 fixedly connected with the vertical supporting profile 3 and a fixing process between the connector 21 and the vertical supporting profile 3, thereby reducing the number of accessories of the shower room, simplifying the assembling process of the shower room and being beneficial for improving the assembling efficiency of the shower room.

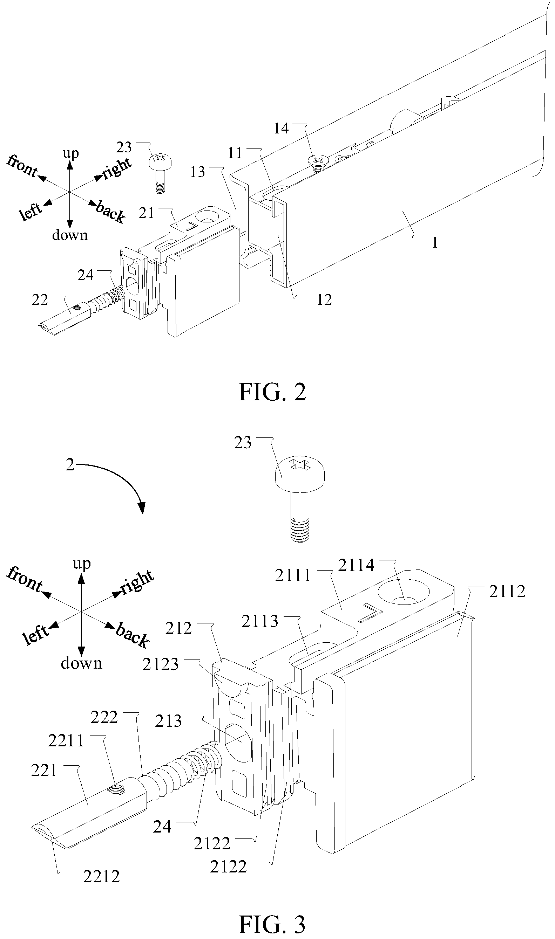

In an exemplary embodiment, as shown in FIG. 3, the limiter 22 includes an inserting pin and the connector 21 is provided with an inserting slot 213. The vertical supporting profile 3 is provided with an inserting hole 31, as shown in FIG. 1.

One end of the inserting pin is inserted into the inserting slot 213 and can slide relative to the connector 21 along a first direction. The other end of the inserting pin is inserted into the inserting hole 31 to limit the relative movement of the transverse profile 1 and the vertical supporting profile 3 along a second direction.

The first direction is a length direction of the transverse profile 1, and the second direction is perpendicular to the first direction.

During assembling, the connector 21 and the transverse profile 1 can be fixed together at first, and then the inserting pin is inserted along the length direction of the transverse profile 1, so that one end of the inserting pin is inserted into the inserting slot 213, and the inserting pin is connected with the connector 21 to ensure that the inserting pin is limited on the connector 21. Next, the connector 21 and the vertical supporting profile 3 are assembled to realize the limiting fit between the connector 21 and the vertical supporting profile 3. Since the inserting pin can slide relative to the connector 21, the other end of the inserting pin can be retracted into the inserting slot 213 during assembling to ensure the smooth assembling of the connector 21 and the vertical supporting profile 3. After that, the other end of the inserting pin can be moved out of the inserting slot 213 and inserted into the inserting hole 31 to realize the limiting fit between the limiter 22 and the vertical supporting profile 3.

Since the inserting pin is inserted into the inserting hole 31 along the length direction of the transverse profile 1 (that is, a left-right direction in the figures), the degrees of freedom of the transverse profile 1 in a front-back direction and an up-down direction can be limited.

In an exemplary embodiment, as shown in FIGS. 2 and 3, the transverse profile 1 is provided with a first sliding hole 11, the connector 21 is provided with a second sliding hole 2113, the inserting pin is provided with a first connecting hole 2211, and the quick mounting assembly 2 further includes a fixer 23.

The fixer 23 is configured to pass through the first sliding hole 11, the second sliding hole 2113 and the first connecting hole 2211 along the second direction, and can slide relative to the transverse profile 1 along the first direction.

In this embodiment, the fitting between the fixer 23 and the first connecting hole 2211 can realize the connection between the limiter 22 and the connector 21 and prevent the limiter 22 from separating from the connector 21. The fitting between the fixer 23 and the first and second sliding holes 11, 2113 can realize the sliding fit between the limiter 22 and the connector 21, and ensure that the limiter 22 is able to slide during assembling, thus preventing interference, reducing assembling difficulty and improving assembling efficiency.

In an exemplary embodiment, as shown in FIG. 3, the fixer 23 includes a first fastener and the first connecting hole 2211 is a threaded hole. The first fastener may be, but is not limited to, a screw. In this way, the connector 21 and the limiter 22 are fixedly connected by the first fastener with firm and reliable fixation. Alternatively, the fixer 23 may not be a first fastener. For example, the fixer 23 may be a snap, a spring pin, a fixing post or the like, so long as it can connect the limiter 22 with the connector 21 and prevent the limiter 22 from separating from the connector 21.

In an exemplary embodiment, as shown in FIGS. 2 and 3, the connector 21 is provided with a second connecting hole 2114 and the transverse profile 1 is provided with a third connecting hole. A second fastener 14 is configured to pass through the second connecting hole 2114 and the third connecting hole, so that the connector 21 is fixedly connected with the transverse profile 1. The second fastener 14 may be, but is not limited to, a screw. In this way, the connector 21 and the transverse profile 1 are fixedly connected by the second fastener 14 with firm and reliable fixation.

In an exemplary embodiment, one end of the inserting pin inserted into the inserting hole 31 is provided with a guide ramp 2212 for guiding the inserting pin to move in the direction of entering the inserting slot 213, as shown in FIG. 3.

In this way, during assembling, the inserting pin can automatically move in the direction of entering the inserting slot 213 under the action of a force exerted by the vertical supporting profile 3 without manually shifting the inserting pin, which can prevent the interference between the inserting pin and the vertical supporting profile 3 from affecting the assembling between the connector 21 and the vertical supporting profile 3, thereby further reducing the assembling difficulty and facilitating further improving of the assembling efficiency.

In an exemplary embodiment, the quick mounting assembly 2 further includes an elastic member 24, as shown in FIGS. 2 and 3, which is fitted with the inserting pin and configured for driving the inserting pin to move in the direction of entering the inserting hole 31 by utilizing reset elastic force of the elastic member 24.

In this way, during assembling, when the inserting pin automatically moves in the direction of entering the inserting slot 213 under the action of the force exerted by the vertical supporting profile 3, the elastic member 24 undergoes elastic deformation to store elastic potential energy. When the vertical supporting profile 3 and the connector 21 are fitted in place, the elastic potential energy is released, and the reset elastic force of the elastic member 24 drives the inserting pin to move in the opposite direction, so that the inserting pin is automatically inserted into the inserting hole 31, thus realizing the limiting fit between the inserting pin and the vertical supporting profile, and ensuring that the inserting pin can be stably inserted into the inserting hole 31 to ensure the fit reliability between the inserting pin and the vertical supporting profile.

In an exemplary embodiment, the inserting pin includes a limiting part 221 and a fitting part 222, as shown in FIG. 3. The limiting part 221 is inserted into the inserting hole 31, the fitting part 222 is connected with the limiting part 221, and a first supporting surface is provided between the limiting part 221 and the fitting part 222, and a second supporting surface is provided in the inserting slot 213.

The elastic member 24 is a spring, and the spring is sleeved on the fitting part 222. One end of the spring abuts against the first supporting surface, and the other end of the spring abuts against the second supporting surface.

The present solution has simple structure, convenient assembling, and the elastic member 24 is not prone to inclination, displacement, etc., and has high reliability in use.

The connector 21 includes a connecting seat 211 and a connecting block 212, as shown in FIG. 1. The transverse profile 1 is provided with a first mounting slot 12 adapted with the connecting seat 211, as shown in FIG. 2. The vertical supporting profile 3 is provided with a second mounting slot 32 adapted with the connecting block 212, as shown in FIG. 1.

The connecting seat 211 is at least partially inserted into the first mounting slot 12 along the length direction of the transverse profile 1 and is fixedly connected with the transverse profile 1. The connecting block 212 is connected with the connecting seat 211, and at least partially inserted into the second mounting slot 32 along the length direction of the vertical supporting profile 3, and is fitted with the vertical supporting profile 3 for positional restriction, so as to limit the relative movement between the vertical supporting profile 3 and the transverse profile 1 along the length direction of the transverse profile 1.

In one example, the inserting slot 213 penetrates through the connecting block 212 along the length direction of the transverse profile 1, the second sliding hole 2113 is communicated with the inserting slot 213, and the first fastener is inserted into the inserting slot 213 through the first sliding hole 11 in the transverse profile 1 and the second sliding hole 2113 in the connector 21 and is threadedly connected with the inserting pin.

During assembling, as shown in FIG. 2, the connecting seat 211 can be inserted into the first mounting slot 12 along the length direction (left-right direction in the figure) of the transverse profile 1 at first. The first mounting slot 12 and the connecting seat 211 can be fitted with each other by a structure, such as a slide rail and a slide slot, to improve the smoothness of the connecting seat 211 entering the first mounting slot 12. The connector 21 is then fixed to the transverse profile 1 by the second fastener 14. Next, the limiter 22 is mounted on the connector 21 (the inserting pin sleeved with the spring is inserted into the inserting slot 213, and the limiter 22 is fixed by the first fastener).

Then, as shown in FIG. 1, the connecting block 212 is inserted into the second mounting slot 32 along the length direction (up-down direction in the figure) of the vertical supporting profile 3. Under the action of the guide ramp 2212 and the spring, the inserting pin automatically avoids the interference on the vertical supporting profile 3 and is automatically inserted into the inserting hole 31 of the vertical supporting profile 3 after the interference is finished, so as to ensure the limiting fit between the connecting block 212 and the vertical supporting profile 3 and the limiting fit between the limiter 22 and the vertical supporting profile 3.

After the shower room is assembled, the vertical supporting profile 3 is fixed on the supporting carrier such as a wall and extends along the vertical direction. The fitting between the vertical supporting profile 3 and the connecting block 212 can limit the movement of connecting block 212 along the left-right direction and the front-back direction, and the connector 21 is fixedly connected with the transverse profile 1, so that the transverse profile 1 can be fixed in the left-right direction and the front-back direction. Furthermore, the inserting pin is inserted into the inserting slot 213 along the left-right direction, and the fitting between the inserting pin with the vertical supporting profile can limit the movement of the inserting pin along the up-down direction and the front-back direction, so that the transverse profile 1 can be fixed in the up-down direction and the front-back direction.

As a result, the degrees of freedom of the transverse profile 1 in the up-down, left-right and front-back directions are limited, and a reliable connection between the transverse profile 1 and the vertical supporting profile 3 is realized. Furthermore, the connecting seat 211 is hidden in the first mounting slot 12, the connecting block 212 is hidden in the second mounting slot 32, and the transverse profile 1 and the vertical supporting profile 3 can be tightly connected, thereby ensuring the aesthetic appearance of the product with convenient and quick assembling process and high assembling efficiency.

The connecting seat 211 may be completely inserted into the first mounting slot 12 or may be partially inserted into the first mounting slot 12. For example, the connecting seat 211 may include a connecting plate 2111 and a guide block 2112, as shown in FIG. 3. The guide block 2112 is adapted to the shape of the first mounting slot 12 and inserted into the first mounting slot 12. The connecting plate 2111 is connected with the guide block 2112 and there is a gap between the connecting plate 2111 and the guide block 2112. The connecting plate 2111 is located outside the first mounting slot 12 and is fixedly connected with the transverse profile 1.

Similarly, the connecting block 212 may be completely inserted into the second mounting slot 32 or may be partially inserted into the second mounting slot 32.

The first end of the transverse profile 1 in the width direction is provided with a guide slot 13, as shown in FIG. 2. The opening of the guide slot 13 faces away from the second end of the transverse profile 1 in the width direction.

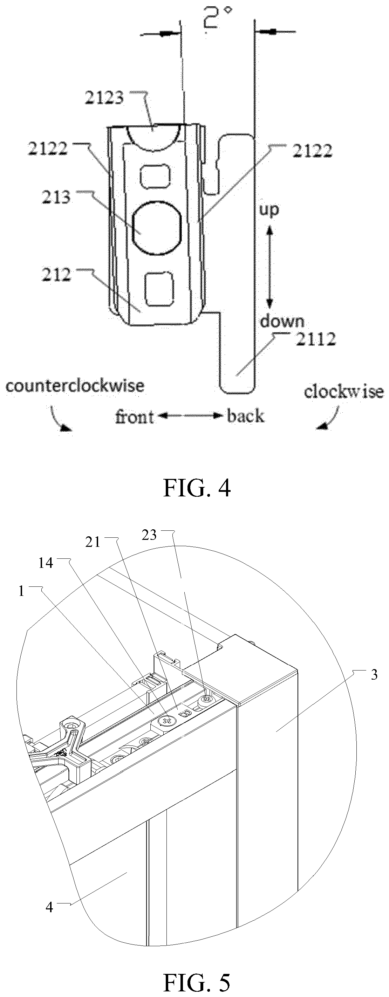

A side wall of the connecting block 212 is provided with a limiting rib 2122, as shown in FIGS. 3 and 4. A slot wall of the second mounting slot 32 is provided with a limiting slot 33, as shown in FIG. 1. The limiting rib 2122 is embedded in the limiting slot 33.

The connecting block 212 is limited at the first end of the vertical supporting profile 3 in the length direction, and the limiting rib 2122 extends obliquely in the direction away from the opening of the guide slot 13 along the direction from the first end of the vertical supporting profile 3 in the length direction to the second end of the vertical supporting profile 3 in the length direction, as shown in FIG. 4.

The contact area between the connecting block 212 and the vertical supporting profile 3 can be reduced by the fitting between the limiting rib 2122 and the limiting slot 33, thereby reducing the friction resistance, which is beneficial for improving the smoothness of assembling.

After the shower room frame structure is assembled, it is required to hang the door glass 4 on the transverse profile 1, and snap a pulley of the door glass 4 into the guide slot 13 of the transverse profile 1 to ensure that the door glass 4 can move left and right along the guide slot 13. Since the door glass 4 is located on one side of the transverse profile 1 in the width direction (i.e., the front-back direction in the figure), and the door glass 4 is heavy, it will pull the transverse profile 1 to incline downward, causing the appearance line of the transverse profile 1 to incline, and the gap between the transverse profile 1 and the vertical supporting profile 3 also inclines, which will affect the appearance of the shower room.

In order to solve the problem described above, in the present solution, the limiting rib 2122 is designed to be pre-inclined so that the transverse profile 1 and the vertical supporting profile 3 incline in the set direction after assembling is completed, and after hanging the door glass 4, the transverse profile 1 will incline in a direction opposite to the set direction due to the action of the door glass 4. In this way, the pre-inclined design of the limiting rib 2122 can compensate the incline of the transverse profile 1 after assembling is completed, so that the appearance lines of the transverse profile 1 and the vertical supporting profile 3 are all kept in a good condition horizontally and vertically after the assembling of the door glass 4 is completed, and the gap between the transverse profile 1 and the vertical supporting profile 3 will not be inclined, thereby improving the appearance of the shower room.

In an exemplary embodiment, the included angle between the limiting rib 2122 and the plane where the opening of the guide slot 13 is located is in a range of 2° to 3°. After testing, the angle range described above can substantially meet the appearance requirements of shower room.

Alternatively, the included angle between the limiting rib 2122 and the plane where the opening of the guide slot 13 is located is not limited to the range described above and can be adjusted as required.

In one example, each of the upper end and lower end of the vertical supporting profile 3 is connected with the transverse profile 1 by the quick mounting assembly 2. The pulley at the top of the door glass 4 is snapped into the guide slot 13 of the upper transverse profile 1, and the pulley at the bottom of the door glass 4 is snapped into the guide slot 13 of the lower transverse profile 1.

In an exemplary embodiment, the connecting block 212 is provided with a limiting protrusion 2123, as shown in FIGS. 3 and 4. The vertical supporting profile 3 is provided with a limiting groove 34, as shown in FIG. 1. The limiting protrusion 2123 is embedded in the limiting groove 34 to limit relative movement between the connector 21 and the vertical supporting profile 3 along the length direction of the vertical supporting profile 3.

The fitting between the limiting protrusion 2123 and the limiting groove 34 can serve a positioning and limiting function in the assembling between the connecting block 212 and the vertical supporting profile 3, which is beneficial to further improve the assembling efficiency.

The assembling process of the shower room frame structure provided by one specific embodiment of the present application will be described below with reference to the accompanying drawings.

In this specific embodiment, as shown in FIG. 1, the length direction of the transverse profile 1 is a left-right direction, the width direction of the transverse profile 1 is a front-back direction, and the height direction of the transverse profile 1 is an up-down direction. The length direction of the vertical supporting profile 3 is an up-down direction, the width direction of the vertical supporting profile 3 is a front-back direction, and the thickness direction of the vertical supporting profile 3 is a left-right direction.

As shown in FIG. 1, a left end of the transverse profile 1 and an upper end of the vertical supporting profile 3 are connected by the quick mounting assembly 2. The connector 21 includes a connecting seat 211 and a connecting block 212. The connecting block 212 is connected with the left end of the connecting seat 211. The connector 21 is provided with an inserting slot 213, as shown in FIG. 3, and the inserting slot 213 penetrates through the left end of the connecting block 212. The front side wall and the rear side wall of the connecting block 212 are provided with limiting ribs 2122 which are pre-titled by 2°, as shown in FIG. 4. The top of the left end face of the connecting block 212 is provided with a semi-cylindrical limiting protrusion 2123.

As shown in FIG. 2, a guide slot 13 is provided at the front end of the transverse profile 1, and the opening of the guide slot 13 is configured to face forward. The first mounting slot 12 is provided at the rear side of the guide slot 13. The second mounting slot 32 is provided at the right end of the vertical supporting profile 3, as shown in FIG. 1. The right side wall of the second mounting slot 32 stops the connecting block 212. The right side wall of the second mounting slot 32 is also provided with a notch to avoid the connecting seat 211. The front and rear side walls of the second mounting slot 32 are provided with limiting slots 33, as shown in FIG. 1. The left slot wall of the second mounting slot 32 is provided with an inserting hole 31, as shown in FIG. 1, the top of the left slot wall of the second mounting slot 32 is provided with a limiting groove 34, and the inserting hole 31 is located below the limiting groove 34.

As shown in FIG. 2, a top wall of the first mounting slot 12 is provided with a first sliding hole 11 and a third connecting hole. The connecting plate 2111 of the connecting seat 211 is provided with a second sliding hole 2113 and a second connecting hole 2114, as shown in FIG. 3. The inserting pin is provided with a first connecting hole 2211, as shown in FIG. 3. The first sliding hole 11 and the second sliding hole 2113 are both obround holes, as shown in FIG. 3. The third connecting hole and the first connecting hole 2211 are both threaded holes. Both the first fastener and the second fastener 14 are screws.

When assembling, as shown in FIG. 2, the guide block 2112 of the connecting seat 211 is firstly inserted into the first mounting slot 12 along the left-to-right direction. Then, the body of the second fastener 14 passes through the second connecting hole 2114 and is screwed into the third connecting hole along the up-to-down direction, so as to realize the fixed connection between the connector 21 and the transverse profile 1.

Then, a spring is sleeved on the fitting part 222 of the inserting pin, and the inserting pin is inserted into the inserting slot 213 of the connector 21 along the left-to-right direction. Next, the body of the first fastener passes through the second sliding hole 2113 and the first sliding hole 11 and is screwed into the first connecting hole 2211 along the up-to-down direction, so that the connector 21 and the limiter 22 are connected.

Finally, as shown in FIG. 1, the connecting block 212 is inserted into the second mounting slot 32 along the up-to-down direction. When mounting, the left end of the inserting pin interferes with the top end of the vertical supporting profile 3. Under the action of the guide ramp 2212 of the inserting pin, the inserting pin may move rightward freely to avoid the top end of the vertical supporting profile 3, so that the connecting block 212 can enter the second mounting slot 32 downward until the limiting protrusion 2123 of the connecting block 212 is embedded in the limiting groove 34 of the vertical supporting profile 3. At this point, the inserting pin corresponds to the inserting hole 31 of the vertical supporting profile 3, and the blocking of the inserting pin by the vertical supporting profile 3 is released, so that the inserting pin can move leftward and be inserted into the inserting hole 31 under the action of the reset elastic force of the spring. In this way, both the limiting fit between the connector 21 and the vertical supporting profile 3 and the limiting fit between the limiter 22 and the vertical supporting profile 3 are realized.

The whole assembling process is convenient and quick, realizing the quick assembling of the shower room frame structure, with fewer accessories and higher assembling efficiency.

Before the connecting block 212 is assembled with the vertical supporting profile 3, the limiting rib 2122 extends obliquely backward along the up-to-down direction, as shown in FIG. 4. When the vertical supporting profile 3 is fixed to a supporting carrier such as a wall, it is maintained in the vertical direction, so that when the connecting block 212 is installed in the second mounting slot 32, the limiting rib 2122 also extends along the vertical direction, causing the connector 21 to rotate clockwise by 2°, and thus the transverse profile 1 to rotate clockwise by 2° as well.

In the subsequent installation of the door glass 4, after the pulley at the top of the door glass 4 is installed in the guide slot 13, the door glass 4 tends to fall down under the action of gravity, which will cause the transverse profile 1 to rotate counterclockwise by about 2° and turn to an exactly vertical state. In this way, the appearance lines of the transverse profile 1 and the vertical supporting profile 3 of the shower room after assembling is completed will be kept in a good condition horizontally and vertically, and the gap between the transverse profile 1 and the vertical supporting profile 3 will not be inclined.

As shown in FIG. 5, the shower room provided by an embodiment of the present application includes the shower room frame structure as described in any of the above embodiments and a door glass 4 hung on the transverse profile 1 of the shower room frame structure.

The shower room provided by the embodiments of the present application includes the shower room frame structure as described in any one of the above embodiments, thus having all the beneficial effects of any of the above embodiments, which will not be repeated here.

In the description of the present disclosure, it should be noted that the orientation or position relationships indicated by the terms "upper", "lower", "one side", "the other side", "one end", "the other end", "side", "relative", "four corners", "periphery" and "square structure" or the like are based on the orientation or position relationships shown in the drawings, which are only for convenience of describing the present disclosure and simplifying the description, rather than indicating or implying that the structure referred has the specific orientation, or is constructed and operated in the specific orientation, and thus cannot be interpreted as a limitation on the present disclosure.

In the description of the embodiments of the present disclosure, unless otherwise explicitly specified and limited, the terms "connection", "direct connection", "indirect connection", "fixed connection", "mounting" and "assembly" should be understood in a broad sense. For example, they may be fixed connection, detachable connection or integrated connection. The terms "mounting", "connection" and "fixed connection" may be direct connection, or indirect connection through an intermediary, or may be an internal communication between two elements. For those of ordinary skills in the art, the specific meanings of the above terms in the present disclosure can be understood according to specific situations.

Although implementations disclosed by the present disclosure are described above, the described contents are only implementations adopted for facilitating the understanding of the present disclosure, and are not intended to limit the present disclosure. Any person skilled in the art to which the present disclosure pertains may make any modifications and changes in the form and details of implementation, but the scope of patent protection of the present disclosure shall still be defined by the appended claims.

## Claims

1. A shower room frame structure, comprising:
a transverse profile (1) and a vertical supporting profile (3); and
a quick mounting assembly (2) for connecting the transverse profile (1) and the vertical supporting profile (3), wherein the quick mounting assembly (2) comprises a connector (21) and a limiter (22), the connector (21) is fixedly connected with the transverse profile (1) and is fitted with the vertical supporting profile (3) for positional restriction, and the limiter (22) is connected with the connector (21) and is fitted with the vertical supporting profile (3) for positional restriction;
the connector (21) comprises a connecting seat (211) and a connecting block (212), the transverse profile (1) is provided with a first mounting slot (12) adapted with the connecting seat (211), and the vertical supporting profile (3) is provided with a second mounting slot (32) adapted with the connecting block (212);
the connecting seat (211) is at least partially inserted into the first mounting slot (12) along a length direction of the transverse profile (1) and fixedly connected with the transverse profile (1); the connecting block (212) is connected with the connecting seat (211) and at least partially inserted into the second mounting slot (32) along a length direction of the vertical supporting profile (3), and is fitted with the vertical supporting profile (3) for positional restriction, so as to limit a relative movement between the vertical supporting profile (3) and the transverse profile (1) along the length direction of the transverse profile (1);
wherein a first end of the transverse profile (1) in a width direction is provided with a guide slot (13), and an opening of the guide slot (13) faces away from a second end of the transverse profile (1) in the width direction;
a side wall of the connecting block (212) is provided with a limiting rib (2122), a slot wall of the second mounting slot (32) is provided with a limiting slot (33), and the limiting rib (2122) is embedded in the limiting slot (33);
the connecting block (212) is limited at a first end of the vertical supporting profile (3) in the length direction, and the limiting rib (2122) extends obliquely in a direction away from the opening of the guide slot (13) along a direction from the first end of the vertical supporting profile (3) in the length direction to a second end of the vertical supporting profile (3) in the length direction.

2. The shower room frame structure according to claim 1, wherein the limiter (22) comprises an inserting pin, the connector (21) is provided with an inserting slot (213), and the vertical supporting profile (3) is provided with an inserting hole (31);
one end of the inserting pin is inserted into the inserting slot (213) and capable of sliding relative to the connector (21) along a first direction; the other end of the inserting pin is inserted into the inserting hole (31) to limit a relative movement between the transverse profile (1) and the vertical supporting profile (3) along a second direction;
the first direction is a length direction of the transverse profile (1), and the second direction is perpendicular to the first direction.

3. The shower room frame structure according to claim 2, wherein the transverse profile (1) is provided with a first sliding hole (11), the connector (21) is provided with a second sliding hole (2113), the inserting pin is provided with a first connecting hole (2211), and the quick mounting assembly (2) further comprises a fixer (23);
the fixer (23) is configured to pass through the first sliding hole (11), the second sliding hole (2113) and the first connecting hole (2211) along the second direction, and be capable of sliding relative to the transverse profile (1) along the first direction.

4. The shower room frame structure according to claim 2, wherein one end of the inserting pin inserted into the inserting hole (31) is provided with a guide ramp (2212), and the guide ramp (2212) is configured for guiding the inserting pin to move in a direction of entering the inserting slot (213).

5. The shower room frame structure according to any one of claims 2 to 4, wherein the quick mounting assembly (2) further comprises:
an elastic member (24) fitted with the inserting pin and configured for driving the inserting pin to move in a direction of inserting into the inserting hole (31) by utilizing a reset elastic force of the elastic member (24).

6. The shower room frame structure according to claim 5, wherein the inserting pin comprises a limiting part (221) and a fitting part (222), the limiting part (221) is inserted into the inserting hole (31), the fitting part (222) is connected with the limiting part (221), a first supporting surface is provided between the limiting part (221) and the fitting part (222), and a second supporting surface is provided in the inserting slot (213);
the elastic member (24) is a spring, the spring is sleeved on the fitting part (222), one end of the spring abuts against the first supporting surface, and the other end of the spring abuts against the second supporting surface.

7. The shower room frame structure according to claim 1, wherein,
an included angle between the limiting rib (2122) and a plane where the opening of the guide slot (13) is located is in the range of 2° to 3°.

8. The shower room frame structure according to claim 1, wherein,
the connecting block (212) is provided with a limiting protrusion (2123), the vertical supporting profile (3) is provided with a limiting groove (34), and the limiting protrusion (2123) is embedded in the limiting groove (34) to limit a relative movement between the connector (21) and the vertical supporting profile (3) along the length direction of the vertical supporting profile (3).

9. A shower room, **characterized by** comprising:
the shower room frame structure according to any one of claims 1 to 8; and
a door glass (4) hung on the transverse profile (1) of the shower room frame structure.

## Patentansprüche

1. Duschraum-Rahmenstruktur, umfassend:
- ein transversales Profil (1) und ein vertikales Stützprofil (3); und
- eine Schnellbefestigungsvorrichtung (2) zum Verbinden des transversalen Profils (1) und des vertikalen Stützprofils (3), wobei die Schnellbefestigungsvorrichtung (2) einen Verbinder (21) und einen Begrenzer (22) umfasst, wobei der Verbinder (21) fest mit dem transversalen Profil (1) verbunden ist und zur Positionsbegrenzung mit dem vertikalen Stützprofil (3) verbunden ist, und wobei der Begrenzer (22) mit dem Verbinder (21) verbunden ist und zur Positionsbegrenzung mit dem vertikalen Stützprofil (3) verbunden ist;
- der Verbinder (21) einen Verbindungssitz (211) und einen Verbindungsblock (212) umfasst, das transversale Profil (1) mit einem ersten Befestigungsschlitz (12) versehen ist, der an den Verbindungssitz (211) angepasst ist, und das vertikale Stützprofil (3) mit einem zweiten Befestigungsschlitz (32) versehen ist, der an den Verbindungsblock (212) angepasst ist;
- der Verbindungssitz (211) ist zumindest teilweise entlang einer Längenrichtung des transversalen Profils (1) in den ersten Befestigungsschlitz (12) eingeführt und fest mit dem transversalen Profil (1) verbunden; der Verbindungsblock (212) ist mit dem Verbindungssitz (211) verbunden und zumindest teilweise entlang einer Längenrichtung des vertikalen Stützprofils (3) in den zweiten Befestigungsschlitz (32) eingeführt und ist mit dem vertikalen Stützprofil (3) zur Positionsbegrenzung verbunden, um eine Relativbewegung zwischen dem vertikalen Stützprofil (3) und dem transversalen Profil (1) entlang der Längenrichtung des transversalen Profils (1) zu begrenzen;
- wobei ein erstes Ende des transversalen Profils (1) in Breitenrichtung mit einem Führungsschlitz (13) versehen ist und eine Öffnung des Führungsschlitzes (13) in Breitenrichtung von einem zweiten Ende des transversalen Profils (1) weg zeigt;
- eine Seitenwand des Verbindungsblocks (212) mit einer Begrenzungsrippe (2122) versehen ist, eine Schlitzwand des zweiten Befestigungsschlitzes (32) mit einem Begrenzungsschlitz (33) versehen ist und die Begrenzungsrippe (2122) in den Begrenzungsschlitz (33) eingebettet ist;
- der Verbindungsblock (212) an einem ersten Ende des vertikalen Stützprofils (3) in Längenrichtung begrenzt ist und sich die Begrenzungsrippe (2122) schräg in einer Richtung von der Öffnung des Führungsschlitzes (13) weg entlang einer Richtung vom ersten Ende des vertikalen Stützprofils (3) in Längenrichtung zu einem zweiten Ende des vertikalen Stützprofils (3) in Längenrichtung erstreckt.

2. Duschraum-Rahmenstruktur nach Anspruch 1,
- wobei der Begrenzer (22) einen Einsteckstift umfasst, der Verbinder (21) mit einem Einführschlitz (213) versehen ist und das vertikale Stützprofil (3) mit einem Einsteckloch (31) versehen ist;
- wobei ein Ende des Einsteckstifts in den Einführschlitz (213) eingeführt ist und relativ zum Verbinder (21) entlang einer ersten Richtung gleiten kann; das andere Ende des Einsteckstifts in das Einsteckloch (31) eingeführt ist, um eine Relativbewegung zwischen dem transversalen Profil (1) und dem vertikalen Stützprofil (3) entlang einer zweiten Richtung zu begrenzen;
- die erste Richtung ist eine Längenrichtung des transversalen Profils (1) und die zweite Richtung ist senkrecht zur ersten Richtung.

3. Duschraum-Rahmenstruktur nach Anspruch 2,
- wobei das transversale Profil (1) mit einem ersten Gleitloch (11) versehen ist, der Verbinder (21) mit einem zweiten Gleitloch (2113) versehen ist, der Einsteckstift mit einem ersten Verbindungsloch (2211) versehen ist und die Schnellbefestigungsvorrichtung (2) ferner eine Fixiereinrichtung (23) umfasst;
- wobei die Fixiereinrichtung (23) so konfiguriert oder ausgebildet ist, dass sie entlang der zweiten Richtung durch das erste Gleitloch (11), das zweite Gleitloch (2113) und das erste Verbindungsloch (2211) hindurchgeht und relativ zum transversalen Profil (1) entlang der ersten Richtung gleiten kann.

4. Duschraum-Rahmenstruktur nach Anspruch 2, wobei ein Ende des in das Einführloch (31) eingeführten Einsteckstifts mit einer Führungsrampe (2212) versehen ist und die Führungsrampe (2212) so konfiguriert oder ausgebildet ist, dass sie den Einsteckstift in Richtung des Einführschlitzes (213) führt.

5. Duschraum-Rahmenstruktur nach einem der Ansprüche 2 bis 4, wobei die Schnellbefestigungsvorrichtung (2) ferner umfasst:
ein elastisches Element (24), das mit dem Einführstift versehen ist und so konfiguriert oder ausgebildet ist, dass es den Einführstift unter Ausnutzung einer elastischen Rücksetzungskraft des elastischen Elements (24) in Richtung des Einführens in das Einführloch (31) bewegt.

6. Duschraum-Rahmenstruktur nach Anspruch 5,
- wobei der Einsteckstift ein Begrenzungsstück (221) und ein Passstück (222) umfasst, wobei das Begrenzungsstück (221) in das Einführloch (31) eingeführt ist, das Passstück (222) mit dem Begrenzungsstück (221) verbunden ist, eine erste Auflagefläche zwischen dem Begrenzungsstück (221) und dem Passstück (222) vorgesehen ist und eine zweite Auflagefläche in dem Einführschlitz (213) vorgesehen ist;
- das elastische Element (24) eine Feder ist, die Feder auf das Passstück (222) aufgesteckt ist, ein Ende der Feder an der ersten Auflagefläche anliegt und das andere Ende der Feder an der zweiten Auflagefläche anliegt.

7. Duschraum-Rahmenstruktur nach Anspruch 1, wobei ein eingeschlossener Winkel zwischen der Begrenzungsrippe (2122) und einer Ebene, in der sich die Öffnung des Führungsschlitzes (13) befindet, im Bereich von 2° bis 3° liegt.

8. Duschraum-Rahmenstruktur nach Anspruch 1, wobei der Verbindungsblock (212) mit einem Begrenzungsvorsprung (2123) versehen ist, das vertikale Stützprofil (3) mit einer Begrenzungsnut (34) versehen ist und der Begrenzungsvorsprung (2123) in die Begrenzungsnut (34) eingebettet ist, um eine Relativbewegung zwischen dem Verbinder (21) und dem vertikalen Stützprofil (3) entlang der Längenrichtung des vertikalen Stützprofils (3) zu begrenzen.

9. Duschraum, **gekennzeichnet durch**:
- die Duschraum-Rahmenstruktur nach einem der Ansprüche 1 bis 8; und
- eine Türscheibe (4), die an dem transversalen Profil (1) der Duschraum-Rahmenstruktur aufgehängt ist.

## Revendications

1. Structure de cadre pour salle de douche, comprenant :
- un profilé transversal (1) et un profilé de support vertical (3) ; et
- un ensemble de montage rapide (2) pour relier le profilé transversal (1) et le profilé de support vertical (3), dans lequel l'ensemble de montage rapide (2) comprend un connecteur (21) et un limiter (22), le connecteur (21) est relié de manière fixe au profilé transversal (1) et est ajusté au profilé de support vertical (3) pour limiter sa position, et le limiteur (22) est relié au connecteur (21) et est ajusté au profilé de support vertical (3) pour limiter sa position ;
- le connecteur (21) comprend un siège de connexion (211) et un bloc de connexion (212), le profilé transversal (1) est muni d'une première fente de montage (12) adaptée au siège de connexion (211), et le profilé de support vertical (3) est muni d'une deuxième fente de montage (32) adaptée au bloc de connexion (212) ;
- le siège de connexion (211) est au moins partiellement inséré dans la première fente de montage (12) dans le sens de la longueur du profilé transversal (1) et relié de manière fixe au profilé transversal (1) ; le bloc de connexion (212) est connecté au siège de connexion (211) et au moins partiellement inséré dans la deuxième fente de montage (32) dans le sens de la longueur du profilé de support vertical (3), et est ajusté avec le profilé de support vertical (3) pour limiter la position, de manière à limiter un mouvement relatif entre le profilé de support vertical (3) et le profilé transversal (1) dans le sens de la longueur du profilé transversal (1) ;
- dans lequel une première extrémité du profilé transversal (1) dans le sens de la largeur est pourvue d'une fente de guidage (13), et une ouverture de la fente de guidage (13) est orientée à l'opposé d'une deuxième extrémité du profilé transversal (1) dans le sens de la largeur;
- une paroi latérale du bloc de connexion (212) est pourvue d'une nervure de limitation (2122), une paroi de fente de la deuxième fente de montage (32) est pourvue d'une fente de limitation (33), et la nervure de limitation (2122) est encastrée dans la fente de limitation (33) ;
- le bloc de connexion (212) est limité à une première extrémité du profilé de support vertical (3) dans le sens de la longueur, et la nervure de limitation (2122) s'étend obliquement dans une direction s'éloignant de l'ouverture de la fente de guidage (13) le long d'une direction allant de la première extrémité du profilé de support vertical (3) dans le sens de la longueur à une deuxième extrémité du profilé de support vertical (3) dans le sens de la longueur.

2. Structure de cadre pour salle de douche selon la revendication 1,
- dans laquelle le limiteur (22) comprend une goupille d'insertion, le connecteur (21) est muni d'une fente d'insertion (213) et le profilé de support vertical (3) est muni d'un trou d'insertion (31) ;
- une extrémité de la goupille d'insertion est insérée dans la fente d'insertion (213) et peut coulisser par rapport au connecteur (21) dans une première direction ; l'autre extrémité de la goupille d'insertion est insérée dans le trou d'insertion (31) pour limiter un mouvement relatif entre le profilé transversal (1) et le profilé de support vertical (3) dans une deuxième direction ;
- la première direction est un sens de la longueur du profilé transversal (1), et la deuxième direction est perpendiculaire à la première direction.

3. Structure de cadre pour salle de douche selon la revendication 2,
- dans laquelle le profilé transversal (1) est muni d'un premier trou coulissant (11), le connecteur (21) est muni d'un deuxième trou coulissant (2113), la goupille d'insertion est munie d'un premier trou de connexion (2211), et l'ensemble de montage rapide (2) comprend en outre un fixeur (23) ;
- le fixeur (23) est configuré ou formé pour passer à travers le premier trou coulissant (11), le deuxième trou coulissant (2113) et le premier trou de connexion (2211) le long de la deuxième direction, et pour pouvoir coulisser par rapport au profilé transversal (1) le long de la première direction.

4. Structure de cadre pour salle de douche selon la revendication 2, dans laquelle une extrémité de la goupille d'insertion insérée dans le trou d'insertion (31) est pourvue d'une rampe de guidage (2212), et la rampe de guidage (2212) est configurée ou formée pour guider la goupille d'insertion afin qu'elle se déplace dans une direction d'entrée dans la fente d'insertion (213).

5. Structure de cadre pour salle de douche selon l'une quelconque des revendications 2 à 4, dans laquelle l'ensemble de montage rapide (2) comprend en outre :
un élément élastique (24) ajusté avec la goupille d'insertion et configuré ou formé pour entraîner la goupille d'insertion à se déplacer dans une direction d'insertion dans le trou d'insertion (31) en utilisant une force élastique de réinitialisation de l'élément élastique (24).

6. Structure de cadre pour salle de douche selon la revendication 5,
- dans laquelle la goupille d'insertion comprend une partie de limitation (221) et une partie d'ajustement (222), la partie de limitation (221) est insérée dans le trou d'insertion (31), la partie d'ajustement (222) est reliée à la partie de limitation (221), une première surface de support est prévue entre la partie de limitation (221) et la partie d'ajustement (222), et une deuxième surface de support est prévue dans la fente d'insertion (213) ;
- l'élément élastique (24) est un ressort, le ressort est emmanché sur la partie d'ajustement (222), une extrémité du ressort bute contre la première surface d'appui, et l'autre extrémité du ressort bute contre la deuxième surface d'appui.

7. Structure de cadre pour salle de douche selon la revendication 1, dans laquelle un angle inclus entre la nervure de limitation (2122) et un plan où se trouve l'ouverture de la fente de guidage (13) est compris entre 2° et 3°.

8. Structure de cadre pour salle de douche selon la revendication 1, dans laquelle le bloc de connexion (212) est muni d'une saillie de limitation (2123), le profilé de support vertical (3) est muni d'une rainure de limitation (34), et la saillie de limitation (2123) est encastrée dans la rainure de limitation (34) afin de limiter un mouvement relatif entre le connecteur (21) et le profilé de support vertical (3) dans le sens de la longueur du profilé de support vertical (3).

9. Une cabine de douche, **caractérisée en ce qu'**elle comprend :
- la structure de cadre pour salle de douche selon l'une quelconque des revendications 1 à 8 ; et
- une vitre de porte (4) suspendue au profilé transversal (1) de la structure de cadre pour salle de douche.
